# EUROPEAN PATENT SPECIFICATION

(11) **EP 3 521 335 B1**
(45) Date of publication and mention of the grant of the patent: **24.04.2024**
(21) Application number: 19158542.1
(22) Date of filing: 05.02.2018
(51) Int. Cl.: C08G 65/40, C08L 71/00, C08L 81/06

(54) **METHOD FOR MANUFACTURING A THREE-DIMENSIONAL OBJECT USING PAEK AND PAES**
VERFAHREN ZUR HERSTELLUNG EINES DREIDIMENSIONALEN OBJEKTS MIT PAEK UND PAES
PROCÉDÉ DE FABRICATION D'UN OBJET TRIDIMENSIONNEL À L'AIDE DE PAEK ET DE PAES

(30) Priority: 06.02.2017 US 201762455087 P; 08.03.2017 EP 17159923
(43) Date of publication of application: 07.08.2019
(62) Divisional of application: 18702312.2
(73) Proprietor: Solvay Specialty Polymers USA, LLC., Alpharetta, GA 30005-3914 (US)
(72) Inventor: JEOL, Stéphane, Cumming, GA 30041 (US); SINGLETARY, Nancy J., Alpharetta, GA 30004 (US); EL-HIBRI, Mohammad Jamal, Alpharetta, GA 30350 (US); AXELRAD, Shari W, Atlanta, 30319 (US); VAN, Hai, Norcross, GA 30093 (US)
(74) Representative: Benvenuti, Federica

(56) References cited:
- EP-A1- 2 123 430
- WO-A1-2014/037374
- US-A1- 2016 122 541

## Description

### Related applications

This patent claims priority to U.S. provisional application No. US 62/455087 filed on February 6, 2017 and to European patent application No. 17159923.6 filed on March 8.

### Technical Field

The present disclosure relates to a method for manufacturing three-dimensional (3D) objects using an additive manufacturing system, wherein the 3D object is printed from a part material comprising a combination of at least one poly(aryl ether ketone) polymer (PAEK) and at least one poly(aryl ether sulfone) (PAES). In particular, the present disclosure relates to a part material incorporating at least a PAEK and at least a PAESfor use in additive manufacturing systems to print 3D objects.

### Background Art

Additive manufacturing systems are used to print or otherwise build 3D parts from digital representations of the 3D parts using one or more additive manufacturing techniques. Examples of commercially available additive manufacturing techniques include extrusion-based techniques, selective laser sintering, powder/binder jetting, electron-beam melting and stereolithography processes. For each of these techniques, the digital representation of the 3D part is initially sliced into multiple horizontal layers. For each sliced layer, a tool path is then generated, which provides instructions for the particular additive manufacturing system to print the given layer.

For example, in an extrusion-based additive manufacturing system, a 3D part may be printed from a digital representation of the 3D part in a layer-by-layer manner by extruding and adjoining strips of a part material. The part material is extruded through an extrusion tip carried by a print head of the system, and is deposited as a sequence of roads on a platen in an x-y plane. The extruded part material fuses to previously deposited part material, and solidifies upon a drop in temperature. The position of the print head relative to the substrate is then incremented along a z-axis (perpendicular to the x-y plane), and the process is then repeated to form a 3D part resembling the digital representation. An example of extrusion-based additive manufacturing system starting from filaments is called Fused Filament Fabrication (FFF).

As another example, in a powder-based additive manufacturing system, a powerful laser is used to locally sinter powder into a solid part. A 3D part is created by sequentially depositing a layer of powder followed by a laser pattern to sinter an image onto that layer. An example of powder-based additive manufacturing system starting from powder is called Selective Laser Sintering (SLS).

As another example yet, carbon-fiber composites 3D part can be prepared using the continuous Fiber-Reinforced Thermosplastic (FRTP) printing method. The printing is based on fused-deposition modeling (FDM) and combines fibers and resin in a nozzle.

One of the fundamental limitations associated with known additive manufacturing methods is the incomplete consolidation of the resulting part, which manifests itself as a lower density relative to a comparable injection molded part and which often leads to downgraded mechanical properties. Thus, FFF results in a part generally exhibiting a lower strength than a comparable injection molded part. This reduction in strength, notably in impact resistance and in tensile properties, may be due to weaker bonding between the adjoining strips of deposited part material, as well as air pockets and voids, as compared to material formed, for example, by injection molding.

There is therefore a need for polymeric part material to be used in additive manufacturing systems, for example FFF, SLS or FRTP printing methods, which make possible the manufacture of 3D objects having a density comparable to injection molded part, as well as a set of mechanical properties (e.g. tensile properties and impact resistance) comparable or even better than injection molded parts.

EP 2123430 (D1) discloses a process for manufacturing a 3D object from a powder by selective sintering by means of electromagnetic radication of the powder wherein the powder comprises a PAEK (co)polymer. D1 does not disclose the polymeric component disclosed herein.

### Summary of invention

An aspect of the present invention is directed to a method for manufacturing a three-dimensional (3D) object with an additive manufacturing system, comprising:
- providing a part material in the form of microparticles comprising a polymeric component comprising:
   a) from 55 to 95 wt.% of at least one poly(aryl ether ketone) (PAEK) having a weight average molecular weight (Mw) ranging from 75,000 to 150,000 g/mol, as determined by gel permeation chromatography (GPC) using phenol and trichlorobenzene (1:1) at 160°C, with polystyrene standards, and
   b) from 5 to 45 wt.% of at least one poly(aryl ether sulfone) (PAES), based on the total weight of the polymeric component of the part material, and
- printing layers of the three-dimensional object from the part material.

Another aspect yet of the present invention is directed to the use of as defined in claim 15 .

The applicant has found that the selection of a poly(aryl ether ketone) (PAEK) having a weight average molecular weight (Mw) ranging from 75,000 to 150,000 g/mol, with a poly(aryl ether sulfone) (PAES), in a specific weight ratio, make possible the manufacture of 3D objects having a density comparable to injection molded part. The 3D objects also present a set of mechanical properties (e.g. tensile properties and impact resistance) comparable to injection molded parts, and even sometimes improved in comparison to injection molded parts.

The 3D objects or articles obtainable by such method of manufacture can be used in a variety of final applications. Mention can be made in particular of implantable device, dental prostheses, brackets and complex shaped parts in the aerospace industry and under-the-hood parts in the automotive industry.

### Description of embodiments

The present invention relates to a method for manufacturing a three-dimensional (3D) object with an additive manufacturing system, such as a powder-based additive manufacturing system (for example SLS).

The method of the present invention comprises the steps of:
- providing a part material comprising a polymeric component which comprises:
   a) from 55 to 95 wt.% of at least one poly(aryl ether ketone) (PAEK) having a weight average molecular weight (Mw) ranging from 75,000 to 150,000 g/mol, for example from 82,000 to 140,000 g/mol or from 85,000 to 130,000 g/mol, as determined by gel permeation chromatography (GPC) using phenol and trichlorobenzene (1:1) at 160°C, with polystyrene standards,
   b) from 5 to 45 wt.% of at least one poly(aryl ether sulfone) (PAES), based on the total weight of the polymeric component of the part material, and
- printing layers of the three-dimensional (3D) object from the part material.

The merit of the applicant has been to identify a composition of matter, also called hereby part material, which makes possible the manufacture of 3D objects having a mechanical property profile (i.e. tensile strength, tensile elongation and impact resistance) comparable or even better than injection molded parts. This composition of matter is based on a combination of at least two distinct aromatic polymers: a poly(aryl ether ketone) (PAEK) having a weight average molecular weight (Mw) ranging from 75,000 to 150,000 g/mol, for example from 82,000 to 140,000 g/mol or from 85,000 to 130,000 g/mol, (as determined by gel permeation chromatography (GPC) using phenol and trichlorobenzene (1:1) at 160°C, with polystyrene standards), and a poly(aryl ether sulfone) (PAES), used in a specific weight ratio.

The expression "part material" hereby refers to a blend of material, notably polymeric compounds, intended to form at least a part of the 3D object. The part material is according to the present invention used as feedstocks to be used for the manufacture of 3D objects or part of 3D objects.

The method of the present invention indeed employs the polymer combination as the main element of the part material, which can for example be shaped in the form microparticles (with a regular shape such as spheres, or with a complex shape obtained by grinding/milling of pellets), to build a 3D object (e.g. a 3D model, a 3D article or a 3D part).

The part material is in the form of microparticles or in powder form, for example having a size comprised between 1 and 200 µm, and for example for being fed through a blade, a roll or an auger-pump print head.

According to an embodiment of the invention, the method for manufacturing a three-dimensional object with an additive manufacturing system comprises a step consisting in extruding the part material. This step may for example occurs when printing or depositing strips or layers of part material. The method for manufacturing 3D objects with an extrusion-based additive manufacturing system is also known as fused filament fabrication technique (FFF).

FFF 3D printers are, for example, commercially available from Indmatech, from Roboze or from Stratasys, Inc. (under the trade name Fortus^{®}). SLS 3D printers are, for example, available from EOS Corporation under the trade name EOSINT^{®} P. FRTP 3D printers are, for example, available from Markforged.

### Part material

The part material employed in the method of the present invention comprises a polymeric component which comprises:
a) from 55 to 95 wt.% of at least one poly(aryl ether ketone) (PAEK) having a weight average molecular weight (Mw) ranging from 75,000 to 150,000 g/mol, for example from 82,000 to 140,000 g/mol or from 85,000 to 130,000 g/mol, as determined by gel permeation chromatography (GPC) using phenol and trichlorobenzene (1:1) at 160°C, with polystyrene standards,
b) from 5 to 45 wt.% of at least one poly(aryl ether sulfone) (PAES), based on the total weight of the polymeric component of the part material.

The part material of the invention may include other components. For example the part material may comprise at least one additive, notably at least one additive selected from the group consisting of fillers, colorants, lubricants, plasticizers, stabilizers, flame retardants, nucleating agents and combinations thereof. Fillers in this context can be reinforcing or non-reinforcing in nature.

In embodiments that include fillers, the concentration of the fillers in the part material ranges from 0.5 wt.% to 30 wt.%, with respect to the total weight of the part material. Suitable fillers include calcium carbonate, magnesium carbonate, glass fibers, graphite, carbon black, carbon fibers, carbon nanofibers, graphene, graphene oxide, fullerenes, talc, wollastonite, mica, alumina, silica, titanium dioxide, kaolin, silicon carbide, zirconium tungstate, boron nitride and combinations thereof.

According to one embodiment, the part material of the present invention comprises:
- a polymeric component comprising:
   a) from 57 to 85 wt.% or from 60 to 80 wt.% of at least one poly(aryl ether ketone) (PAEK) having a weight average molecular weight (Mw) ranging from 75,000 to 150,000 g/mol, for example from 82,000 to 140,000 g/mol or from 85,000 to 130,000 g/mol (as determined by gel permeation chromatography (GPC) using phenol and trichlorobenzene (1:1) at 160°C, with polystyrene standards), and
   b) from 15 to 43 wt.% or from 20 to 40 wt.% of at least one poly(aryl ether sulfone) (PAES),
      based on the total weight of the polymeric component, and
- from 0 to 30 wt.% of at least one additive, for example selected from the group consisting of fillers, colorants, lubricants, plasticizers, flame retardants, nucleating agents and stabilizers, based on the total weight of the part material.

According to another embodiment, the part material of the present invention consists essentially of:
- a polymeric component comprising:
   a) from 55 to 95 wt.%, from 57 to 85 wt.% or from 60 to 80 wt.% of at least one poly(aryl ether ketone) (PAEK) having a weight average molecular weight (Mw) ranging from 75,000 to 150,000 g/mol, for example from 82,000 to 140,000 g/mol or from 85,000 to 140,000 g/mol, as determined by gel permeation chromatography (GPC) using phenol and trichlorobenzene (1:1) at 160°C, with polystyrene standards, and
   b) from 5 to 45 wt.%, from 15 to 43 wt.% or from 20 to 40 wt.% of at least one poly(aryl ether sulfone) (PAES),
      based on the total weight of the polymeric component, and
- from 0 to 30 wt.%, from 0.1 to 28 wt.% or from 0.5 to 25 wt.% of at least one additive selected from the group consisting of fillers, colorants, lubricants, plasticizers, flame retardant, nucleating agent and stabilizers, based on the total weight of the part material.

### Poly(aryl ether ketone) (PAEK)

As used herein, a "poly(aryl ether ketone) (PAEK)" denotes any polymer comprising more than 50 mol.% of recurring units (R_{PAEK}) comprising a Ar' -C(=O)-Ar* group, where Ar' and Ar*, equal to or different from each other, are aromatic groups, the mol.% being based on the total number of moles in the polymer. The recurring units (R_{PAEK}) are selected from the group consisting of units of formulae (J-A) to (J-D) below: 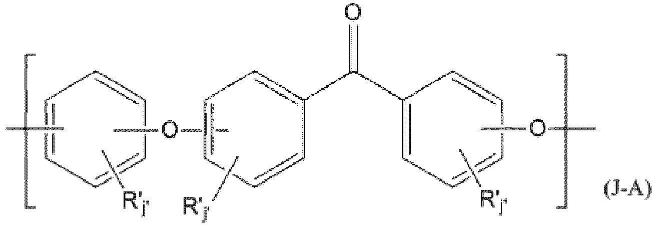 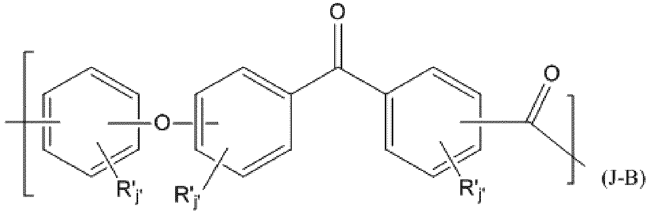 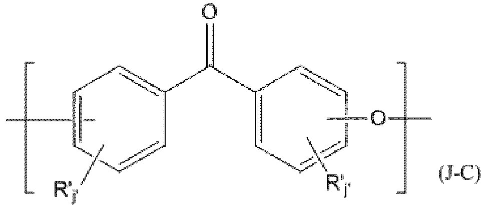 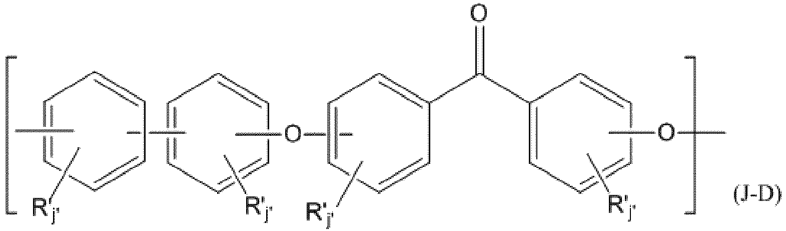 where
- R' , at each location, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j' , for each R', is independently zero or an integer ranging from 1 to 4.

Each phenylene moiety of the recurring unit (R_{PAEK}) may, independently from one another, have a 1,2-, a 1,3- or a 1,4-linkage to the other phenylene moieties. According to an embodiment, each phenylene moiety of the recurring unit (R_{PAEK}), independently from one another, has a 1,3- or a 1,4-linkage to the other phenylene moieties. According to another embodiment yet, each phenylene moiety of the recurring unit (R_{PAEK}) has a 1,4-linkage to the other phenylene moieties.

According to an embodiment, j' is zero for each R'. In other words, according to this embodiment, the recurring units (R_{PAEK}) are selected from the group consisting of units of formulae (J'-A) to (J'-D):

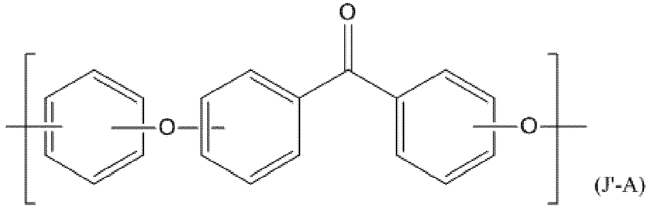

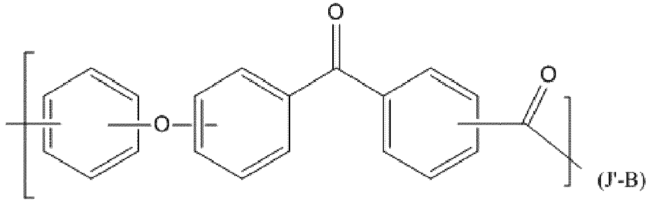

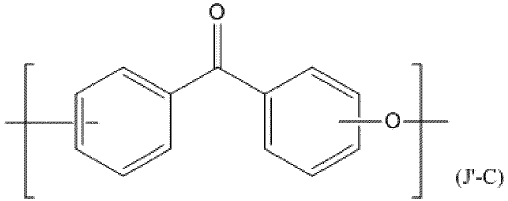

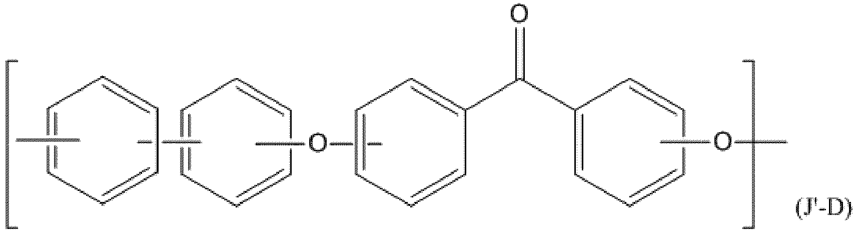

According to an embodiment of the present invention, at least 60 mol. %, at least 70 mol. %, at least 80 mol. %, at least 90 mol. %, at least 95 mol. %, at least 99 mol. % or all of the recurring units in the PAEK are recurring units (R_{PAEK}) selected from the group consisting of units of formulae (J-A) to (J-D) or selected from the group consisting of units of formulae (J'-A) to (J'-D).

In some embodiments, the PAEK is a poly(ether ether ketone) (PEEK). As used herein, a "poly(ether ether ketone) (PEEK)" denotes any polymer of which more than 50 mol.% of the recurring units (R_{PAEK}) are recurring units of formula (J"-A), the mol.% being based on the total number of moles in the polymer:

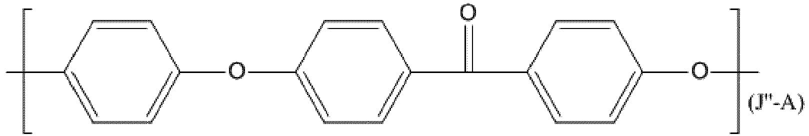

According to an embodiment, at least 60 mol.%, at least 70 mol.%, at least 80 mol.%, at least 90 mol.%, at least 95 mol.%, at least 99 mol.%, or 100 mol.% of the recurring units (R_{PAEK}) are recurring units (J"-A).

In another embodiment, the PAEK is a poly(ether ketone ketone) (PEKK). As used herein, a "poly(ether ketone ketone) (PEKK)" denotes any polymer of which more than 50 mol.% of the recurring units (R_{PAEK}) are a combination of recurring units of formula (J"-B) and formula (J‴-B), the mol.% being based on the total number of moles in the polymer:

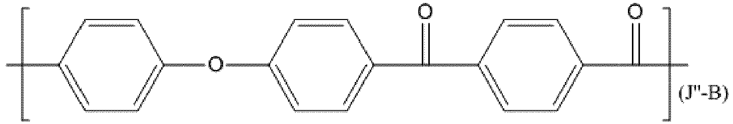

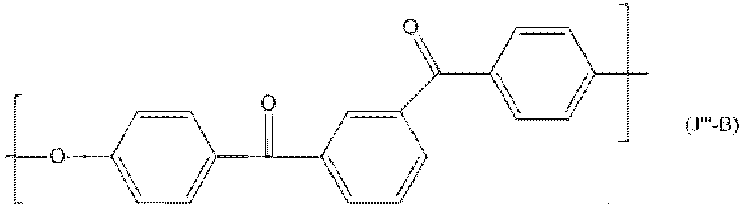

According to an embodiment, at least 60 mol.%, at least 70 mol.%, at least 80 mol.%, at least 90 mol.%, at least 95 mol.%, at least 99 mol.%, or 100 mol.% of the recurring units (R_{PAEK}) are a combination of recurring units (J"-B) and (J‴-B).

In yet another embodiment, the PAEK is a poly(ether ketone) (PEK). As used herein, a "poly(ether ketone) (PEK)" denotes any polymer of which more than 50 mol.% of the recurring units (R_{PAEK}) are recurring units of formula (J"-C), the mol.% being based on the total number of moles in the polymer:

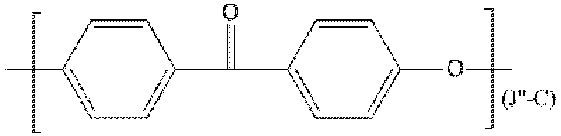

According to an embodiment, at least 60 mol.%, at least 70 mol.%, at least 80 mol.%, at least 90 mol.%, at least 95 mol.%, at least 99 mol.%, or 100 mol.% of the recurring units (R_{PAEK}) are recurring units (J"-C).

According to a preferred embodiment, the PAEK is PEEK. PEEK is commercially available as KetaSpire^{®} PEEK from Solvay Specialty Polymers USA, LLC.

PEEK can be prepared by any method known in the art. It can for example result from the condensation of 4,4'-difluorobenzophenone and hydroquinone in presence of a base. The reactor of monomer units takes place through a nucleophilic aromatic substitution. The molecular weight (for example the weight average molecular weight Mw) can be adjusting the monomers molar ratio and measuring the yield of polymerisation (e.g. measure of the torque of the impeller that stirs the reaction mixture).

According to the present invention, the part material comprises from 55 to 95 wt.% of at least one poly(aryl ether ketone) (PAEK) having a weight average molecular weight (Mw) ranging from 82,000 to 150,000 g/mol, for example from 85,000 to 140,000 g/mol (as determined by gel permeation chromatography (GPC) using phenol and trichlorobenzene (1:1) at 160°C, with polystyrene standards), for example from 55 to 95 wt.% of poly(ether ether ketone) (PEEK) having such Mw.

According to one embodiment, the part material comprises from 55 to 90 wt.%, from 57 to 85 wt.%, from 60 to 80 wt.%, of at least one poly(aryl ether ketone) (PAEK) having a weight average molecular weight (Mw) ranging from 75,000 to 150,000 g/mol, for example from 82,000 to 140,000 g/mol or from 85,000 to 130,000 g/mol, (as determined by gel permeation chromatography (GPC) using phenol and trichlorobenzene (1:1) at 160°C, with polystyrene standards), for example of poly(ether ether ketone) (PEEK) having such Mw, based on the total weight of the polymeric component of the part material.

According to the present invention, the weight average molecular weight Mw of the PAEK is from 75,000 to 150,000 g/mol, for example from 82,000 to 140,000 g/mol or from 85,000 to 140,000 g/mol.

The weight average molecular weight (Mw) of PAEK, for example PEEK, can be determined by gel permeation chromatography (GPC) using phenol and trichlorobenzene (1:1) at 160°C (2x PL Gel mixed B, 10m, 300 x 7.5 mm using a Polymer Laboratories PL-220 unit; flow rate: 1.0 mL/min; injection volume: 200 µL of a 0.2w/v% sample solution), with polystyrene standards.

More precisely, the weight average molecular weight (Mw) can be measured by gel permeation chromatography (GPC). According to the method used in the experimental part, samples were dissolved in a 1:1 mixture of phenol and 1,2,4-trichlorobenzene at 190°C temperature. Samples were then passed through 2x PL Gel mixed B, 10m, 300 x 7.5 mm using a Polymer Laboratories PL-220 unit maintained at 160°C equipped with a differential refractive index detector and calibrated with 12 narrow molecular weight polystyrene standards (Peak molecular weight range: 1,000 - 1,000,000). A flow rate of 1.0 mL/min and injection volume of 200 µL of a 0.2w/v% sample solution was selected. The weight average molecular weight (Mw) was reported.

### Poly(aryl ether sulfone) (PAES)

For the purpose of the present invention, a "poly(aryl ether sulfone) (PAES)" denotes any polymer of which at least 50 mol. % of the recurring units are recurring units (R_{PAES}) of formula (K), the mol. % being based on the total number of moles in the polymer: 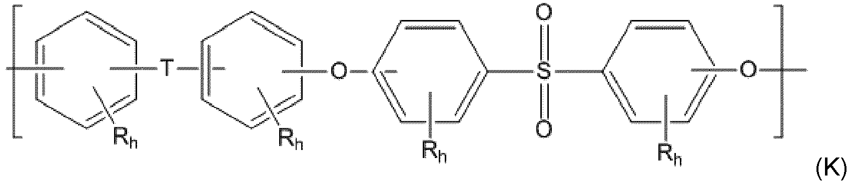 where
- R, at each location, is independently selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
- h, for each R, is independently zero or an integer ranging from 1 to 4; and
- T is selected from the group consisting of a bond and a group -C(Rj)(Rk)-, where Rj and Rk, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium.

According to an embodiment, Rj and Rk are methyl groups.

According to an embodiment, h is zero for each R. In other words, according to this embodiment, the recurring units (R_{PAEs}) are units of formula (K'):

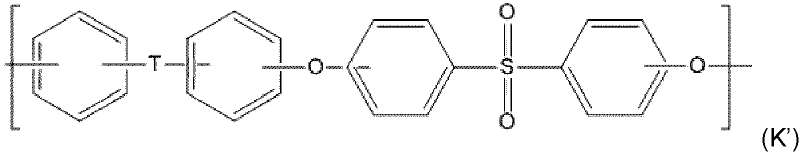

According to an embodiment of the present invention, at least 60 mol. %, at least 70 mol. %, at least 80 mol. %, at least 90 mol. %, at least 95 mol. %, at least 99 mol. % or all of the recurring units in the PAES are recurring units (R_{PAES}) of formula (K) or formula (K').

According to an embodiment, the poly(aryl ether sulfone) (PAES) is a poly(biphenyl ether sulfone) (PPSU).

A poly(biphenyl ether sulfone) polymer is a polyarylene ether sulfone which comprises a biphenyl moiety. Poly(biphenyl ether sulfone) is also known as polyphenyl sulfone (PPSU) and for example results from the condensation of 4,4'-dihydroxybiphenyl (biphenol) and 4,4'-dichlorodiphenyl sulfone.

For the purpose of the present invention, a poly(biphenyl ether sulfone) (PPSU) denotes any polymer of which more than 50 mol.% of the recurring units are recurring units (R_{PPSU}) of formula (L): 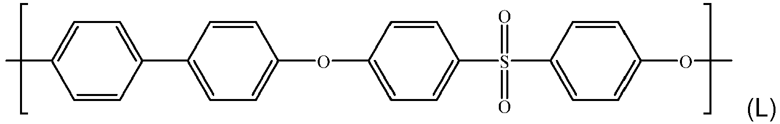 (the mol. % being based on the total number of moles in the polymer).

The PPSU polymer of the present invention can therefore be a homopolymer or a copolymer. If it is a copolymer, it can be a random, alternate or block copolymer.

According to an embodiment of the present invention, at least 60 mol. %, at least 70 mol. %, at least 80 mol. %, at least 90 mol. %, at least 95 mol. %, at least 99 mol. % or all of the recurring units in the PPSU are recurring units (R_{PPSU}) of formula (L).

When the poly(biphenyl ether sulfone) (PPSU) is a copolymer, it can be made of recurring units (R_{*PPSU}), different from recurring units (R_{PPSU}), such as recurring units of formula (M), (N) and/or (O):

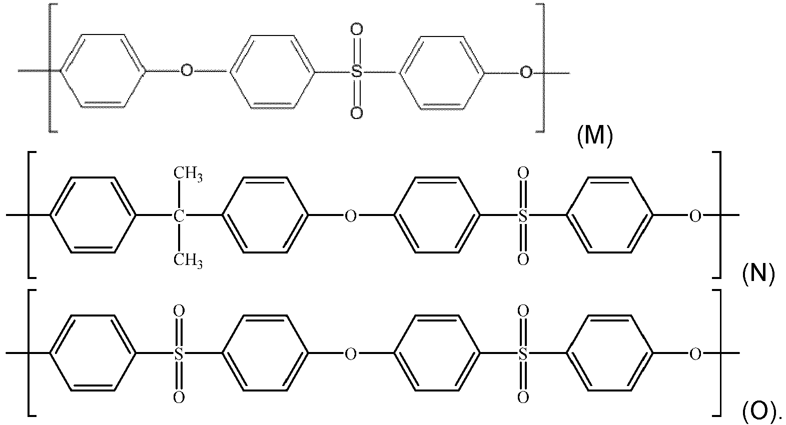

The poly(biphenyl ether sulfone) (PPSU) can also be a blend of a PPSU homopolymer and at least one PPSU copolymer as described above.

The poly(biphenyl ether sulfone) (PPSU) can be prepared by any method known in the art. It can for example result from the condensation of 4,4'-dihydroxybiphenyl (biphenol) and 4,4'-dichlorodiphenyl sulfone. The reaction of monomer units takes place through nucleophilic aromatic substitution with the elimination of one unit of hydrogen halide as leaving group. It is to be noted however that the structure of the resulting poly(biphenyl ether sulfone) does not depend on the nature of the leaving group.

PPSU is commercially available as Radel^{®} PPSU from Solvay Specialty Polymers USA, L.L.C.

According to the present invention, the part material comprises from 5 to 45 wt.% of at least one poly(aryl ether sulfone) (PAES), for example from 5 to 45 wt.% of at least one poly(biphenyl ether sulfone) (PPSU).

According to one embodiment, the part material comprises from 15 to 43 wt.% or from 20 to 40 wt.%, of at least one poly(biphenyl ether sulfone) (PPSU), based on the total weight of the polymeric component of the part material.

According to the present invention, the weight average molecular weight Mw of the PPSU may be from 30,000 to 80,000 g/mol, for example from 35,000 to 75,000 g/mol or from 40,000 to 70,000 g/mol.

The weight average molecular weight (Mw) of PPSU can be determined by gel permeation chromatography (GPC) using methylene chloride as a mobile phase, with polystyrene standards.

According to an embodiment, the poly(aryl ether sulfone) (PAES) is a polysulfone (PSU).

For the purpose of the present invention, a polysulfone (PSU) denotes any polymer of which more at least 50 mol. % of the recurring units are recurring units (R_{PSU}) of formula (K'-C): 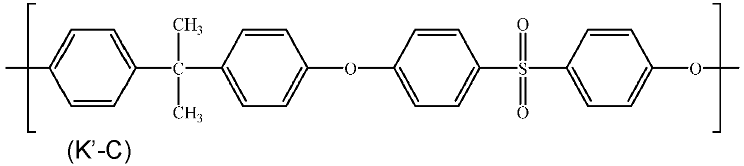 (the mol. % being based on the total number of moles in the polymer).

The PSU polymer of the present invention can therefore be a homopolymer or a copolymer. If it is a copolymer, it can be a random, alternate or block copolymer.

According to an embodiment of the present invention, at least 60 mol. %, at least 70 mol. %, at least 80 mol. %, at least 90 mol. %, at least 95 mol. %, at least 99 mol. % or all of the recurring units in the PSU are recurring units (R_{PSU}) of formula (L).

When the poly(biphenyl ether sulfone) (PSU) is a copolymer, it can be made of recurring units (R*_{PSU}), different from recurring units (R_{PSU}), such as recurring units of formula (L), (M) and/or (O) above described.

PSU is available as Udel^{®} PSU from Solvay Specialty Polymers USA, L. L. C.

According to the present invention, the part material comprises from 5 to 45 wt.% of a poly(aryl ether sulfone) (PAES), for example from 5 to 45 wt.% of a polysulfone (PSU).

According to one embodiment, the part material comprises from 15 to 43 wt.% or from 20 to 40 wt.%, of polysulfone (PSU), based on the total weight of the polymeric component of the part material.

According to the present invention, the weight average molecular weight Mw of the PSU may be from 30,000 to 80,000 g/mol, for example from 35,000 to 75,000 g/mol or from 40,000 to 70,000 g/mol.

The weight average molecular weight (Mw) of PAES, for example PPSU and PSU, can be determined by gel permeation chromatography (GPC) using methylene chloride as a mobile phase (2x 5µ mixed D columns with guard column from Agilent Technologies ; flow rate: 1.5 mL/min; injection volume: 20 µL of a 0.2w/v% sample solution), with polystyrene standards.

More precisely, the weight average molecular weight (Mw) can be measured by gel permeation chromatography (GPC), using methylene chloride as the mobile phase. In the experimental part, the following method was used: two 5µ mixed D columns with guard column from Agilent Technologies were used for separation. An ultraviolet detector of 254nm was used to obtain the chromatogram. A flow rate of 1.5ml/min and injection volume of 20 µL of a 0.2w/v% solution in mobile phase was selected. Calibration was performed with 12 narrow molecular weight polystyrene standards (Peak molecular weight range: 371,000 to 580 g/mol). The weight average molecular weight (Mw) was reported.

According to an embodiment of the present invention, the part material comprises:
- a polymeric component comprising:
   a) from 55 to 95 wt.%, from 57 to 85 wt.% or from 60 to 80 wt.% of at least one PEEK, and
   b) from 5 to 45 wt.%, from 15 to 43 wt.% or from 20 to 40 wt.% of at least one PPSU,
      based on the total weight of the polymeric component, and
- from 0 to 30 wt.%, from 0.5 to 28 wt.% or from 1 to 25 wt.% of at least one additive selected from the group consisting of fillers, colorants, lubricants, plasticizers, flame retardants, nucleating agent and stabilizers, based on the total weight of the part material.

According to an embodiment of the present invention, the part material comprises:
- a polymeric component comprising:
   a) from 55 to 95 wt.%, from 57 to 85 wt.% or from 60 to 80 wt.% of at least one PEEK, and
   b) from 5 to 45 wt.%, from 15 to 43 wt.% or from 20 to 40 wt.% of at least one PSU,
      based on the total weight of the polymeric component, and
- from 0 to 30 wt.%, from 0.5 to 28 wt.% or from 1 to 25 wt.% of at least one additive selected from the group consisting of fillers, colorants, lubricants, plasticizers, flame retardants, nucleating agents and stabilizers, based on the total weight of the part material.

The applicant has found that such a part material advantageously presents, when used to manufacture 3D objects, a mechanical property profile (i.e. tensile strength, tensile elongation and impact resistance) comparable or even better than injection molded parts.

The part material of the present invention can be made by methods well known to the person of ordinary skill in the art. For example, such methods include, but are not limited to, melt-mixing processes. Melt-mixing processes are typically carried out by heating the polymer components above the melting temperature of the thermoplastic polymers thereby forming a melt of the thermoplastic polymers. In some embodiments, the processing temperature ranges from about 280-450°C, preferably from about 290-440°C, from about 300-430°C or from about 310-420°C. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the part material, the components of the part material, i.e. PAES, PAEK and optionally additives, are fed to the melt-mixing apparatus and melt-mixed in that apparatus. The components may be fed simultaneously as a powder mixture or granule mixer, also known as dry-blend, or may be fed separately.

The order of combining the components during melt-mixing is not particularly limited. In one embodiment, the component can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

'

### Support material

The method of the present invention may also employ another polymeric component to support the 3D object under construction. This polymeric component, similar or distinct from the part material used to build a 3D object, is hereby called support material. Support material may be required during 3D printing to provide vertical and/or lateral support in the higher operating conditions required for the high-temperature part materials (e.g. PEEK requiring a processing temperature around 360-400° C).

The support material, possibly used in the context of the present method, advantageously possesses a high melting temperature (i.e. above 260°C), in order to resist high temperature applications. The support material may also possess a water absorption behaviour or a solubility in water at a temperature lower than 110°C, in order sufficiently swell or deform upon exposure to moisture. According to an embodiment of the present invention, the method for manufacturing a three-dimensional object with an additive manufacturing system further comprises the steps of:
- providing a support material,
- printing layers of a support structure from the support material, and
- removing at least a portion of the support structure from the three-dimensional object.

A variety of polymeric components can be used as a support material. Notably, support material can comprise polyamides or copolyamides, such as for example the ones described in co-pending US provisional application # 62/316,835 and co-pending US provisional application # 62/419,035.

### Applications

The present invention also relates to the use of a part material comprising a polymeric component comprising:
a) from 55 to 95 wt.% of at least one poly(aryl ether ketone) (PAEK) having a weight average molecular weight (Mw) ranging from 75,000 to 150,000 g/mol, for example from 82,000 to 140,000 g/mol or from 85,000 to 140,000 g/mol, as determined by gel permeation chromatography (GPC) using phenol and trichlorobenzene (1:1) at 160°C, with polystyrene standards, and
b) from 5 to 45 wt.% of at least one poly(aryl ether sulfone) (PAES), based on the total weight of the polymeric component of the part material, for the manufacture of three-dimensional objects.

All of the embodiments described above with respect to the part material do apply equally to the use of the part material.

According to an embodiment of the invention, the PAEK is a poly(ether ether ketone) (PEEK) having a weight average molecular weight (Mw) ranging from 75,000 to 150,000 g/mol, for example from 82,000 to 140,000 g/mol or from 85,000 to 140,000 g/mol, as determined by gel permeation chromatography (GPC) using phenol and trichlorobenzene (1:1) at 160°C, with polystyrene standards, and the PAES is a poly(biphenyl ether sulfone) (PPSU) and/or a polysulfone (PSU).

The present invention also relates to the use of a part material comprising a polymeric component comprising:
a) from 55 to 95 wt.% of at least one poly(aryl ether ketone) (PAEK) having a weight average molecular weight (Mw) ranging from 75,000 to 150,000 g/mol, for example from 82,000 to 140,000 g/mol or from 85,000 to 140,000 g/mol, as determined by gel permeation chromatography (GPC) using phenol and trichlorobenzene (1:1) at 160°C, with polystyrene standards, and
b) from 5 to 45 wt.% of at least one poly(aryl ether sulfone) (PAES), based on the total weight of the polymeric component of the part material, for the manufacture of a filament for use in the manufacture of three-dimensional objects.

3D objects or 3D articles are obtainable, at least in part, from the method of manufacture of the present invention, using the part material herein described. These 3D objects or 3D articles present a density comparable to injection molded objects or articles. They also present comparable or improved mechanical properties, notably impact strength (or impact resistance, for example notched impact resistance), stiffness (measured as the modulus of elasticity), tensile strength or elongation.

The 3D objects or articles obtainable by such method of manufacture can be used in a variety of final applications. Mention can be made in particular of implantable device, dental prostheses, brackets and complex shaped parts in the aerospace industry and under-the-hood parts in the automotive industry.

### EXAMPLES

The invention will be now described in more detail with reference to the following examples, whose purpose is merely illustrative and not intended to limit the scope of the invention.

### Starting Materials

The following materials were used to prepare the Examples:
PEEK #1: a poly(ether ether ketone) (PEEK) having a Mw of 102,000 g/mol, prepared according to the following process:
   In a 500 ml 4-neck reaction flask fitted with a stirrer, a N2 inlet tube, a Claisen adapter with a thermocouple plunging in the reaction medium, and a Dean-Stark trap with a condenser and a dry ice trap were introduced 128 g of diphenyl sulfone, 28.6 g of p-hydroquinone , and 57.2 g of 4,4'-difluorobenzophenone.
   The reaction mixture was heated slowly to 150° C. At 150° C, a mixture of 28.43 g of dry Na₂CO₃ and 0.18 g of dry K₂CO₃ was added via a powder dispenser to the reaction mixture over 30 minutes. At the end of the addition, the reaction mixture was heated to 320° C at 1°C/minute.
   After 15 to 30 minutes, when the polymer had the expected Mw, the reaction was stopped by the introduction of 6.82 g of 4,4'-difluorobenzophenone to the reaction mixture while keeping a nitrogen purge on the reactor. After 5 minutes, 0.44 g of lithium chloride were added to the reaction mixture. 10 minutes later, another 2.27 g of 4,4'-difluorobenzophenone were added to the reactor and the reaction mixture was kept at temperature for 15 minutes. The reactor content was then cooled.
   The solid was broken up and ground. The polymer was recovered by filtration of the salts, washing and drying. The GPC analysis showed a number average molecular weight Mw=102,000 g/mol.
PEEK #2: a poly(ether ether ketone) (PEEK) having a Mw of 71,000 g/mol, prepared according to the same process than PEEK #1, except that the reaction was stopped earlier.
PPSU #1: a poly(biphenyl ether sulfone) (PPSU) with a Mw of 51,500 g/mol, prepared according to the following process:
   The synthesis of the PPSU was achieved by the reaction in a 1L flask of 83.8 g of 4,4'-biphenol,131.17 g of 4,4'-dichlorodiphenyl sulfone dissolved in a mixture of 400 g of sulfolane with the addition of 66.5g of dry K₂CO₃.
   The reaction mixture was heated up to 210 °C and maintained at this temperature until the polymer had the expected Mw. An excess of methyl chloride was then added to the reaction.
   The reaction mixture was heated up to 210 °C and maintained at this temperature , until the polymer had the expected Mw. An excess of methyl chloride was then added to the reaction.
   The reaction mixture was diluted with 600 g of MCB. The poly(biphenyl ether sulfone) was recovered by filtration of the salts, washing and drying.
   The GPC analysis showed a number average molecular weight (Mw) of 51,500 g/mol.
PPSU #2: a poly(biphenyl ether sulfone) (PPSU) with a Mw of 45,900 g/mol, prepared according to the same process than PPSU #1, except that the reaction was stopped earlier.
PSU #1: a polysulfone (PSU) with a Mw of 67,000 g/mol prepared according to the following process:
   The synthesis of the PSU was achieved by the reaction in a 1L flask of 114.14 g (0.5 mol) of bisphenol A dissolved in a mixture of 247 g of dimethylsulfoxide (DMSO) and 319.6 g of monochlorobenzene (MCB) with an aqueous solution of 79.38 g of sodium hydroxide at 50.34%, followed by distillation of the water to generate a solution of bisphenol A sodium salt free from water by heating the solution up to 140 °C. In the reactor was then introduced a solution of 143.59 g (0.5 mol) of 4,4'-dichlorodiphenyl sulfone in 143 g of MCB. The reaction mixture was heated up to 165 °C and maintained at this temperature during 15 to 30 min, until the polymer had the expected Mw. An excess of methyl chloride was then added to the reaction.
   The reaction mixture was diluted with 400 mL of MCB and then cooled to 120 °C. 30 g of methyl chloride was added over 30 min. The polysulfone was recovered by filtration of the salts, washing and drying. The GPC analysis showed a number average molecular weight (Mw) of 67,000 g/mol.

### Blend Compounding

Each formulation was melt compounded using a 26 mm diameter Coperion^{®} ZSK-26 co-rotating partially intermeshing twin screw extruder having an LID ratio of 48:1. The barrel sections 2 through 12 and the die were heated to set point temperatures as follows:
Barrels 2-6: 350 °C
Barrels 7-12: 360 °C
Die: 360 °C

In each case, the resin blends were fed at barrel section 1 using a gravimetric feeder at throughput rates in the range 30-35 lb/hr. The extruder was operated at screw speeds of around 200 RPM. Vacuum was applied at barrel zone 10 with a vacuum level of about 27 inches of mercury. A single-hole die was used for all the compounds to give a filament approximately 2.6 to 2.7 mm in diameter and the polymer filament exiting the die was cooled in water and fed to the pelletizer to generate pellets approximately 2.7 mm in length. Pellets were dried at 140° C for 16 h under vacuum prior to filament processing (FFF, according to the invention) or injection molding (IM, comparative examples).

### Test methods

### * Weight average molecular weight (Mw) of the polymers

PEAK: The molecular weight was measured by gel permeation chromatography (GPC). Samples were dissolved in a 1:1 mixture of phenol and 1,2,4-trichlorobenzene at 190°C temperature. Samples were then passed through 2x PL Gel mixed B, 10m, 300 x 7.5 mm using a Polymer Laboratories PL-220 unit maintained at 160°C equipped with a differential refractive index detector and calibrated with 12 narrow molecular weight polystyrene standards (Peak molecular weight range: 1,000 - 1,000,000). A flow rate of 1.0ml/min and injection volume of 200 µL of a 0.2w/v% sample solution was selected. The weight average molecular weight (Mw) was reported.
PAES: The molecular weight was measured by gel permeation chromatography (GPC), using methylene chloride as a mobile phase. Two 5µ mixed D columns with guard column from Agilent Technologies were used for separation. An ultraviolet detector of 254nm was used to obtain the chromatogram. A flow rate of 1.5 ml/min and injection volume of 20 µL of a 0.2 w/v% solution in mobile phase was selected. Calibration was performed with 12 narrow molecular weight polystyrene standards (Peak molecular weight range: 371,000 to 580 g/mol). The weight average molecular weight (Mw) was reported.

## Claims

1. A method for manufacturing a three-dimensional (3D) object with an additive manufacturing system, comprising:
- providing a part material in the form of microparticles, comprising a polymeric component comprising:
a) from 55 to 95 wt.% of at least one poly(aryl ether ketone) (PAEK) having a weight average molecular weight (Mw) ranging from 75,000 to 150,000 g/mol, as determined by gel permeation chromatography (GPC) using phenol and trichlorobenzene (1:1) at 160°C, with polystyrene standards, and
b) from 5 to 45 wt.% of at least one poly(aryl ether sulfone) (PAES), based on the total weight of the polymeric component of the part material, and
- printing layers of the three-dimensional object from the part material.

2. The method of claim 1, wherein the part material also comprises up to 30 wt.%, based on the total weight of the part material, of at least one additive selected from the group consisting of fillers, colorants, lubricants, plasticizers, flame retardants, nucleating agents and stabilizers.

3. The method of claim 1 or 2, wherein the PAEK is a poly(ether ether ketone) (PEEK) having a weight average molecular weight (Mw) ranging from 82,000 to 150,000 g/mol, as determined by gel permeation chromatography (GPC) using ASTM D5296 with polystyrene standards.

4. The method according to any one of claims 1-3, wherein the PAEK is a poly(ether ether ketone) (PEEK) of which more than 50 mol% of the recurring units (R_{PAEK}) are recurring units of formula (J"-A), the mol% being based on the total number of moles in the polymer:

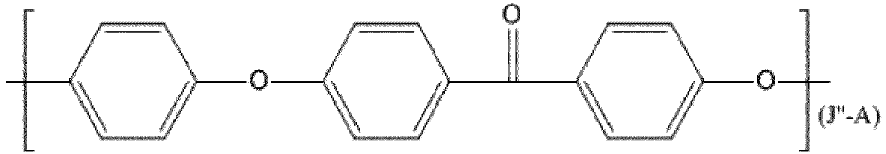

5. The method according to any one of claims 1-3, wherein the PAEK is a poly(ether ether ketone) (PEEK) where 100 mol% of the recurring units are of formula (J"-A)

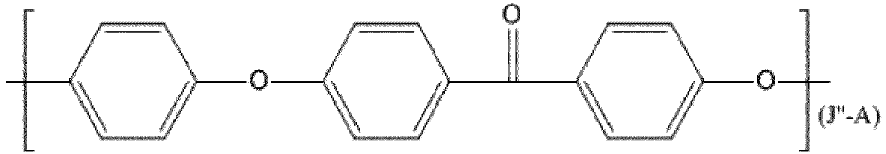

6. The method of any one of claims 1-5, wherein the PAES is a poly(biphenyl ether sulfone) (PPSU) and/or a polysulfone (PSU).

7. The method of any one of claims 1-6, wherein the PAES is a poly(biphenyl ether sulfone) (PPSU) where:
- at least 95 mol.% of the recurring units in the PPSU; or
- at least 99 mol% of the recurring units in the PPSU; or
- all the recurring units in the PPSU;
are recurring units (R_{PPSU}) of formula (L):

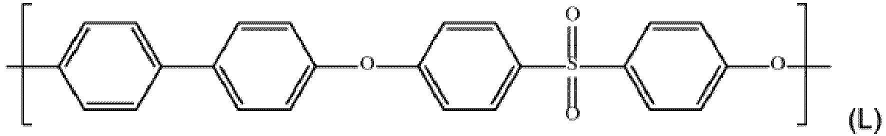

8. Part material, in the form of microparticles or in powder form, having a size comprised between 1 and 200 µm, comprising a polymeric component which comprises:
a) from 55 to 95 wt.% of at least one poly(aryl ether ketone) (PAEK) having a weight average molecular weight (Mw) ranging from 75,000 to 150,000 g/mol (as determined by gel permeation chromatography (GPC) using phenol and trichlorobenzene (1:1) at 160°C, with polystyrene standards), and
b) from 5 to 45 wt.% of at least one poly(aryl ether sulfone) (PAES), based on the total weight of the polymeric component of the part material.

9. The part material of claim 8, further comprising at least one additive selected from the group consisting of fillers, colorants, lubricants, plasticizers, stabilizers, flame retardants, nucleating agents and combinations thereof.

10. The part material of claim 8 or 9, comprising:
- a polymeric component comprising:
a) from 57 to 85 wt.% of at least one PAEK, and
b) from 15 to 43 wt.% of at least one PAES, based on the total weight of the polymeric component, and
- from 0 to 30 wt.% of at least one additive, for example selected from the group consisting of fillers, colorants, lubricants, plasticizers, flame retardants, nucleating agents and stabilizers, based on the total weight of the part material.

11. The part material of any one of claims 8-10, wherein the PAES is a poly(biphenyl ether sulfone) (PPSU) or a polysulfone (PSU).

12. The part material according to any one of claims 8-11, wherein the PAEK is a poly(ether ether ketone) (PEEK) of which more than 50 mol% of the recurring units (R_{PAEK}) are recurring units of formula (J"-A), the mol% being based on the total number of moles in the polymer:

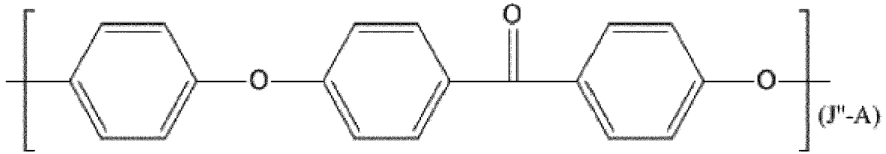

13. The part material according to any one of claims 8-12, wherein the PAEK is a poly(ether ether ketone) (PEEK) where 100 mol% of the recurring units are of formula (J"-A):

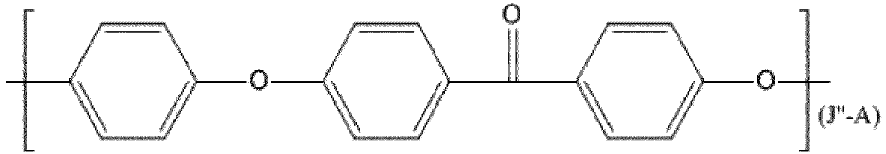

14. The part material of any one of claims 8-13, wherein the PAES is a poly(biphenyl ether sulfone) (PPSU) where:
- at least 95 mol.% of the recurring units in the PPSU; or
- at least 99 mol% of the recurring units in the PPSU; or
- all the recurring units in the PPSU;
are recurring units (R_{PPSU}) of formula (L):

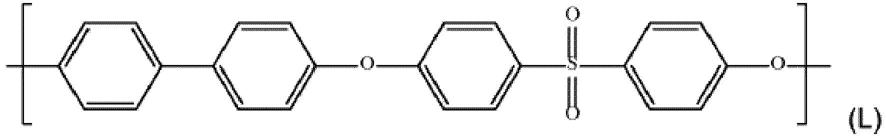

15. Use of a part material, in the form of microparticles or in powder form, having a size comprised between 1 and 200 µm, comprising a polymeric component comprising:
a) from 55 to 95 wt.% of at least one poly(aryl ether ketone) (PAEK) having a weight average molecular weight (Mw) ranging from 75,000 to 150,000 g/mol (as determined by gel permeation chromatography (GPC) using phenol and trichlorobenzene (1:1) at 160°C, with polystyrene standards), and
b) from 5 to 45 wt.% of at least one poly(aryl ether sulfone) (PAES), based on the total weight of the polymeric component of the part material,
for the manufacture of three-dimensional objects.

16. Use of claim 15, wherein the PAEK is a poly(ether ether ketone) (PEEK) having a weight average molecular weight (Mw) ranging from 75,000 to 150,000 g/mol (as determined by gel permeation chromatography (GPC) using phenol and trichlorobenzene (1:1) at 160°C, with polystyrene standards), and the PAES is a poly(biphenyl ether sulfone) (PPSU) and/or a polysulfone (PSU).

17. Use of any one of claims 15-16, wherein the PAES is a poly(biphenyl ether sulfone) (PPSU) or a polysulfone (PSU).

18. Use of any one of claims 15-17, wherein the part material also comprises up to 30 wt.%, based on the total weight of the part material, of at least one additive selected from the group consisting of fillers, colorants, lubricants, plasticizers, flame retardants, nucleating agents and stabilizers.

## Patentansprüche

1. Verfahren zur Herstellung eines dreidimensionalen (3D) Objekts mit einem additiven Fertigungssystem, umfassend:
- Bereitstellen eines Teilmaterials in Form von Mikroteilchen, umfassend eine polymere Komponente, umfassend:
a) 55 bis 95 Gew.-% von mindestens einem Poly(aryletherketon) (PAEK) mit einem gewichtsmittleren Molekulargewicht (Mw) im Bereich von 75.000 bis 150.000 g/mol, bestimmt mittels Gelpermeationschromatographie (GPC) unter Verwendung von Phenol und Trichlorbenzol (1:1) bei 160 °C mit Polystyrolstandards, und
b) 5 bis 45 Gew.-% von mindestens einem Poly(arylethersulfon) (PAES),
bezogen auf das Gesamtgewicht der polymeren Komponente des Teilmaterials, und
- Drucken von Schichten des dreidimensionalen Objekts aus dem Teilmaterial.

2. Verfahren nach Anspruch 1, wobei das Teilmaterial auch bis zu 30 Gew.-%, bezogen auf das Gesamtgewicht des Teilmaterials, von mindestens einem Additiv ausgewählt aus der Gruppe bestehend aus Füllstoffen, Farbmitteln, Schmiermitteln, Weichmachern, Flammschutzmitteln, Nukleierungsmitteln und Stabilisatoren umfasst.

3. Verfahren nach Anspruch 1 oder 2, wobei das PAEK ein Poly(etheretherketon) (PEEK) mit einem gewichtsmittleren Molekulargewicht (Mw) im Bereich von 82.000 bis 150.000 g/mol, bestimmt mittels Gelpermeationschromatographie (GPC) unter Verwendung von ASTM D5296 mit Polystyrolstandards, ist.

4. Verfahren nach einem der Ansprüche 1-3, wobei das PAEK ein Poly(etheretherketon) (PEEK) ist, wobei es sich bei mehr als 50 Mol-% der Wiederholungseinheiten (R_{PAEK}) um Wiederholungseinheiten der Formel (J"-A) handelt, wobei sich die Mol-%-Angabe auf die Gesamtzahl der Mole in dem Polymer bezieht:

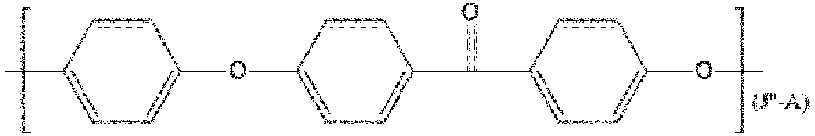

5. Verfahren nach einem der Ansprüche 1-3, wobei das PAEK ein Poly(etheretherketon) (PEEK) ist, wobei 100 Mol-% der Wiederholungseinheiten die Formel (J"-A) aufweisen:

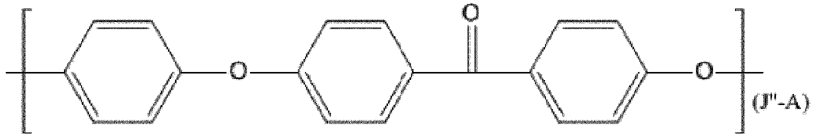

6. Verfahren nach einem der Ansprüche 1-5, wobei das PAES ein Poly(biphenylethersulfon) (PPSU) und/oder ein Polysulfon (PSU) ist.

7. Verfahren nach einem der Ansprüche 1-6, wobei das PAES ein Poly(biphenylethersulfon) (PPSU) ist, wobei:
- mindestens 95 Mol-% der Wiederholungseinheiten in dem PPSU oder
- mindestens 99 Mol-% der Wiederholungseinheiten in dem PPSU oder
- alle der Wiederholungseinheiten in dem PPSU Wiederholungseinheiten (R_{PPSU}) der Formel (L) sind:

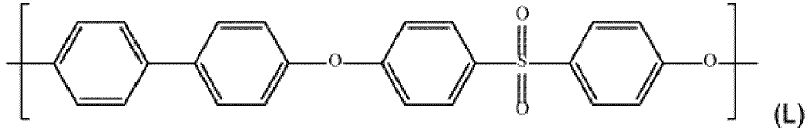

8. Teilmaterial in Form von Mikroteilchen oder in Pulverform mit einer Größe zwischen 1 und 200 pm, umfassend eine polymere Komponente, die Folgendes umfasst:
a) 55 bis 95 Gew.-% von mindestens einem Poly(aryletherketon) (PAEK) mit einem gewichtsmittleren Molekulargewicht (Mw) im Bereich von 75.000 bis 150.000 g/mol, bestimmt mittels Gelpermeationschromatographie (GPC) unter Verwendung von Phenol und Trichlorbenzol (1:1) bei 160 °C mit Polystyrolstandards, und
b) 5 bis 45 Gew.-% von mindestens einem Poly(arylethersulfon) (PAES),
bezogen auf das Gesamtgewicht der polymeren Komponente des Teilmaterials.

9. Teilmaterial nach Anspruch 8, ferner umfassend mindestens ein Additiv ausgewählt aus der Gruppe bestehend aus Füllstoffen, Farbmitteln, Schmiermitteln, Weichmachern, Stabilisatoren, Flammschutzmitteln, Nukleierungsmitteln und Kombinationen davon.

10. Teilmaterial nach Anspruch 8 oder 9, umfassend:
- eine polymere Komponente, umfassend:
a) 57 bis 85 Gew.-% von mindestens einem PAEK und
b) 15 bis 43 Gew.-% von mindestens einem PAES,
bezogen auf das Gesamtgewicht der polymeren Komponente, und
- 0 bis 30 Gew.-% von mindestens einem Additiv, beispielsweise ausgewählt aus der Gruppe bestehend aus Füllstoffen, Farbmitteln, Schmiermitteln, Weichmachern, Flammschutzmitteln, Nukleierungsmitteln und Stabilisatoren, bezogen auf das Gesamtgewicht des Teilmaterials.

11. Teilmaterial nach einem der Ansprüche 8-10, wobei das PAES ein Poly(biphenylethersulfon) (PPSU) und/oder ein Polysulfon (PSU) ist.

12. Teilmaterial nach einem der Ansprüche 8-11, wobei das PAEK ein Poly(etheretherketon) (PEEK) ist, wobei es sich bei mehr als 50 Mol-% der Wiederholungseinheiten (R_{PAEK}) und Wiederholungseinheiten der Formel (J"-A) handelt, wobei sich die Mol-%-Angabe auf die Gesamtzahl der Mole in dem Polymer bezieht:

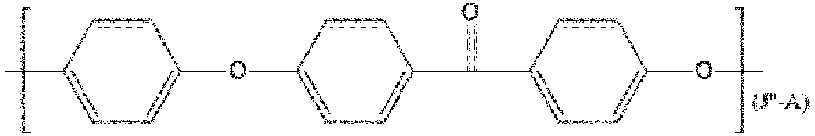

13. Teilmaterial nach einem der Ansprüche 8-12, wobei das PAEK ein Poly(etheretherketon) (PEEK) ist, wobei 100 Mol-% der Wiederholungseinheiten die Formel (J"-A) aufweisen:

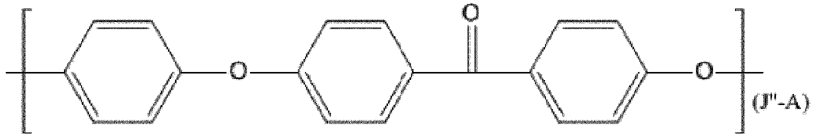

14. Teilmaterial nach einem der Ansprüche 8-13, wobei das PAES ein Poly(biphenylethersulfon) (PPSU) ist, wobei:
- mindestens 95 Mol-% der Wiederholungseinheiten in dem PPSU oder
- mindestens 99 Mol-% der Wiederholungseinheiten in dem PPSU oder
- alle der Wiederholungseinheiten in dem PPSU Wiederholungseinheiten (R_{PPSU}) der Formel (L) sind:

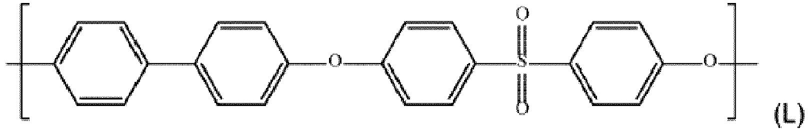

15. Verwendung eines Teilmaterials in Form von Mikroteilchen oder in Pulverform mit einer Größe zwischen 1 und 200 pm, umfassend eine polymere Komponente, umfassend:
a) 55 bis 95 Gew.-% von mindestens einem Poly(aryletherketon) (PAEK) mit einem gewichtsmittleren Molekulargewicht (Mw) im Bereich von 75.000 bis 150.000 g/mol, bestimmt mittels Gelpermeationschromatographie (GPC) unter Verwendung von Phenol und Trichlorbenzol (1:1) bei 160 °C mit Polystyrolstandards, und
b) 5 bis 45 Gew.-% von mindestens einem Poly(arylethersulfon) (PAES),
bezogen auf das Gesamtgewicht der polymeren Komponente des Teilmaterials,
zur Fertigung von dreidimensionalen Objekten.

16. Verwendung nach Anspruch 15, wobei das PAEK ein Poly(etheretherketon) (PEEK) mit einem gewichtsmittleren Molekulargewicht (Mw) im Bereich von 75.000 bis 150.000 g/mol, bestimmt mittels Gelpermeationschromatographie (GPC) unter Verwendung von Phenol und Trichlorbenzol (1:1) bei 160 °C mit Polystyrolstandards, ist und das PAES ein Poly(biphenylethersulfon) (PPSU) und/oder ein Polysulfon (PSU) ist.

17. Verwendung nach einem der Ansprüche 15-16, wobei das PAES ein Poly(biphenylethersulfon) (PPSU) oder ein Polysulfon (PSU) ist.

18. Verwendung nach einem der Ansprüche 15-17, wobei das Teilmaterial auch bis zu 30 Gew.-%, bezogen auf das Gesamtgewicht des Teilmaterials, von mindestens einem Additiv ausgewählt aus der Gruppe bestehend aus Füllstoffen, Farbmitteln, Schmiermitteln, Weichmachern, Flammschutzmitteln, Nukleierungsmitteln und Stabilisatoren umfasst.

## Revendications

1. Procédé pour la fabrication d'un objet tridimensionnel (3D) avec un système de fabrication additive, comprenant :
- la fourniture d'un matériau de pièce sous la forme de microparticules, comprenant un composant polymérique comprenant :
a) de 55 à 95 % en poids d'au moins une polyaryléthercétone (PAEK) ayant un poids moléculaire moyen en poids (Mw) dans la plage de 75 000 à 150 000 g/mole, comme déterminé par chromatographie à perméation de gel (GPC) en utilisant du phénol et du trichlorobenzène (1 : 1) à 160 °C, avec des références de polystyrène, et
b) de 5 à 45 % en poids d'au moins une polyaryléthersulfone (PAES),
sur la base du poids total du composant polymérique du matériau de pièce, et
- l'impression de couches de l'objet tridimensionnel à partir du matériau de pièce.

2. Procédé selon la revendication 1, le matériau de pièce comprenant également jusqu'à 30 % en poids, sur la base du poids total du matériau de pièce, d'au moins un additif choisi dans le groupe constitué par des charges, des matières colorantes, des lubrifiants, des plastifiants, des agents ignifugeants, des agents de nucléation et des stabilisants.

3. Procédé selon la revendication 1 ou 2, la PAEK étant une polyétheréthercétone (PEEK) ayant un poids moléculaire moyen en poids (Mw) dans la plage de 82 000 à 150 000 g/mole, comme déterminé par chromatographie à perméation de gel (GPC) en utilisant la norme ASTM D5296 avec des références de polystyrène.

4. Procédé selon l'une quelconque des revendications 1 à 3, le PAEK étant une polyétheréthercétone (PEEK) de laquelle plus de 50 % en moles des motifs répétitifs (R_{PAEK}) sont des motifs répétitifs de formule (J"-A), le % en moles étant basé sur le nombre total de moles dans le polymère :

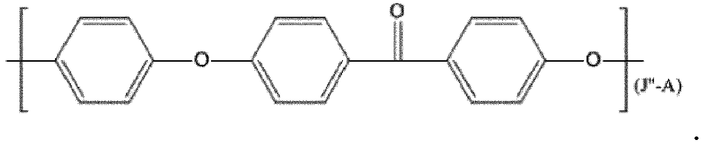

5. Procédé selon l'une quelconque des revendications 1 à 3, le PAEK étant une polyétheréthercétone (PEEK) où 100 % en moles des motifs répétitifs sont de formule (J''-A)

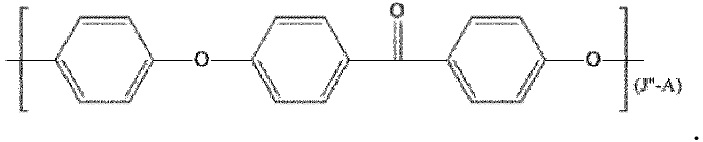

6. Procédé selon l'une quelconque des revendications 1 à 5, la PAES étant une polybiphényléthersulfone (PPSU) et/ou une polysulfone (PSU).

7. Procédé selon l'une quelconque des revendications 1 à 6, la PAES étant une polybiphényléthersulfone (PPSU) où :
- au moins 95 % en moles dans la PPSU ; ou
- au moins 99 % en moles dans la PPSU ; ou
- tous les motifs répétitifs dans la PPSU ;
sont des motifs répétitifs (R_{PPSU}) de formule (L) :

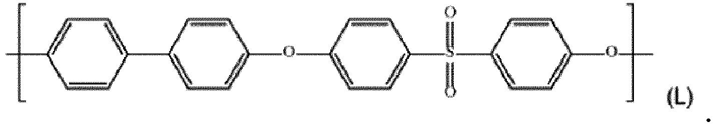

8. Matériau de pièce, sous la forme de microparticules ou sous forme de poudre, ayant une taille comprise entre 1 et 200 pm, comprenant un composant polymérique qui comprend :
a) de 55 à 95 % en poids d'au moins une polyaryléthercétone (PAEK) ayant un poids moléculaire moyen en poids (Mw) dans la plage de 75 000 à 150 000 g/mole (comme déterminé par chromatographie à perméation de gel (GPC) en utilisant du phénol et du trichlorobenzène (1 : 1) à 160 °C, avec des références de polystyrène), et
b) de 5 à 45 % en poids d'au moins une polyaryléthersulfone (PAES),
sur la base du poids total du composant polymérique du matériau de pièce.

9. Matériau de pièce selon la revendication 8, comprenant en outre au moins un additif choisi dans le groupe constitué par des charges, des matières colorantes, des lubrifiants, des plastifiants, des stabilisants, des agents ignifugeants, des agents de nucléation et des combinaisons correspondantes.

10. Matériau de pièce selon la revendication 8 ou 9, comprenant :
- un composant polymérique comprenant :
a) de 57 à 85 % en poids d'au moins une PAEK, et
b) de 15 à 43 % en poids d'au moins une PAES,
sur la base du poids total du composant polymérique, et
- de 0 à 30 % en poids d'au moins un additif, par exemple choisi dans le groupe constitué par des charges, des matières colorantes, des lubrifiants, des plastifiants, des agents ignifugeants, des agents de nucléation et des stabilisants, sur la base du poids total du matériau de pièce.

11. Matériau de pièce selon l'une quelconque des revendications 8 à 10, la PAES étant une polybiphényléthersulfone (PPSU) ou une polysulfone (PSU).

12. Matériau de pièce selon l'une quelconque des revendications 8 à 11, le PAEK étant une polyétheréthercétone (PEEK) de laquelle plus de 50 % en moles des motifs répétitifs (R_{PAEK}) sont des motifs répétitifs de formule (J"-A), le % en moles étant basé sur le nombre total de moles dans le polymère :

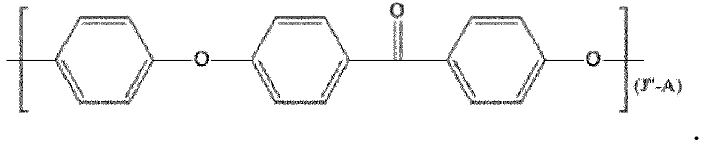

13. Matériau de pièce selon l'une quelconque des revendications 8 à 12, le PAEK étant une polyétheréthercétone (PEEK) où 100 % en moles des motifs répétitifs sont de formule (J''-A)

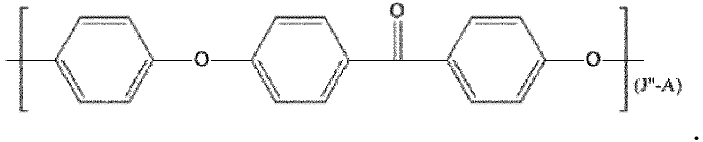

14. Matériau de pièce selon l'une quelconque des revendications 8 à 13, la PAES étant une polybiphényléthersulfone (PPSU) où :
- au moins 95 % en moles dans la PPSU ; ou
- au moins 99 % en moles dans la PPSU ; ou
- tous les motifs répétitifs dans la PPSU ;
sont des motifs répétitifs (R_{PPSU}) de formule (L) :

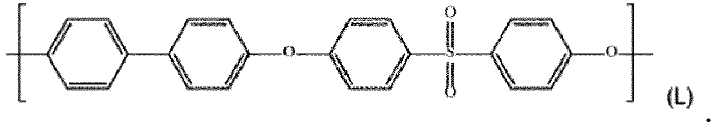

15. Utilisation d'un matériau de pièce, sous la forme de microparticules ou sous forme de poudre, ayant une taille comprise entre 1 et 200 pm, comprenant un composant polymérique qui comprend :
c) de 55 à 95 % en poids d'au moins une polyaryléthercétone (PAEK) ayant un poids moléculaire moyen en poids (Mw) dans la plage de 75 000 à 150 000 g/mole (comme déterminé par chromatographie à perméation de gel (GPC) en utilisant du phénol et du trichlorobenzène (1 : 1) à 160 °C, avec des références de polystyrène), et
d) de 5 à 45 % en poids d'au moins une polyaryléthersulfone (PAES),
sur la base du poids total du composant polymérique du matériau de pièce,
pour la fabrication d'objets tridimensionnels.

16. Utilisation selon la revendication 15, la PAEK étant une polyétheréthercétone (PEEK) ayant un poids moléculaire moyen en poids (Mw) dans la plage de 75 000 à 150 000 g/mole (comme déterminé par chromatographie à perméation de gel (GPC) en utilisant du phénol et du trichlorobenzène (1 : 1) à 160 °C, avec des références de polystyrène), et la PAES étant une polybiphényléthersulfone (PPSU) et/ou une polysulfone (PSU).

17. Utilisation selon l'une quelconque des revendications 15 et 16, la PAES étant une polybiphényléthersulfone (PPSU) ou une polysulfone (PSU).

18. Utilisation selon l'une quelconque des revendications 15 à 17, le matériau de pièce comprenant également jusqu'à 30 % en poids, sur la base du poids total du matériau de pièce, d'au moins un additif choisi dans le groupe constitué par des charges, des matières colorantes, des lubrifiants, des plastifiants, des agents ignifugeants, des agents de nucléation et des stabilisants.
